**Europäisches Patentamt**

**European Patent Office**

**Office européen des brevets**

(19)

(11) Veröffentlichungsnummer: **0 015 521**
**A2**

(12) # EUROPÄISCHE PATENTANMELDUNG

(21) Anmeldenummer: **80101029.9**

(22) Anmeldetag: **03.03.80**

(51) Int. Cl.³: **A 23 B 4/04, A 23 C 19/14**

(30) Priorität: **06.03.79 DE 2908649**

(43) Veröffentlichungstag der Anmeldung: **17.09.80**
**Patentblatt 80/19**

(84) Benannte Vertragsstaaten: **BE FR NL SE**

(71) Anmelder: **Seydelmann, Ludwig, Hölderlinstrasse 9, D-7000 Stuttgart 1 (DE)**

(72) Erfinder: **Seydelmann, Ludwig, Hölderlinstrasse 9, D-7000 Stuttgart 1 (DE)**

(74) Vertreter: **Commentz, Gerd, Dipl.-Ing., Klippeneckstrasse 4, D-7000 Stuttgart 1 (DE)**

(54) **Verfahren zum Betrieb einer für Lebensmittel geeigneten Gasbehandlungsanlage und zur Durchführung dieses Verfahrens geeignete Anlage.**

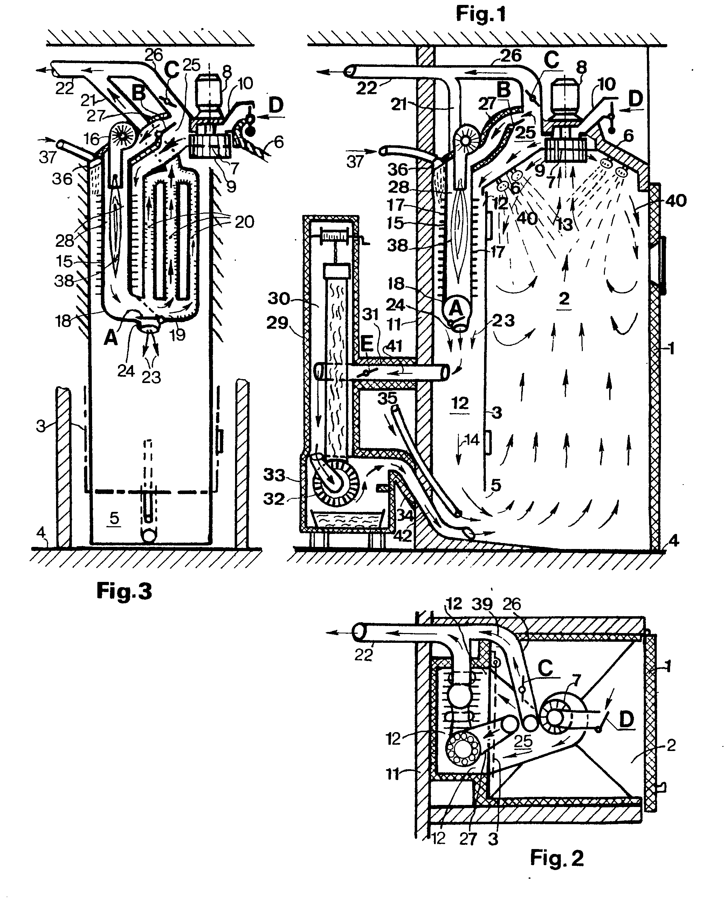

(57) Die in der Fig. 1 im Schnitt dargestellte Gasbehandlungsanlage weist eine Kammer 2 auf, durch die die Behandlungsgase über einen Kreislaufgaskanal 12 im Kreislauf 13/14 hindurchtreten. In dem Kreislaufgaskanal 12 befindet sich ein Muffelbrenner 16, dessen Brennergase wahlweise und auch teilweise über ein Heizregister 20 abgeführt oder über einen Rohrstutzen in den Kreislaufgaskanal 12 eingeleitet und den Behandlungsgasen beigegeben werden. Diese gegebenenfalls vorerhitzten und damit zur Aufnahme weiterer Räuchersubstanzen geeigneten Behandlungsgase können dabei auch durch einen Rauchgasgenerator 29 hindurchgeführt werden. Von den aus der Kammer 2 austretenden, aufgebrauchten und damit mageren Behandlungsgasen können Teile derselben abgezweigt und entweder dem Abgaskanal 22 direkt zugeführt oder in die Muffel 15 des Muffelbrenners 16 eingeleitet und in derselben nachverbrannt werden.

EP 0 015 521 A2

ACTORUM AG

PATENTANWALT 0015521

DIPL.-ING. GERD COMMENTZ

7 STUTTGART 13

KLIPPENECKSTRASSE 4 · TELEFON (0711) 47109

19. Februar 1980

S 514

Ludwig Seydelmann, Hölderlinstraße 9, 7000 Stuttgart 1
Bundesrepublik Deutschland

## Verfahren zum Betrieb einer für Lebensmittel geeigneten Gasbehandlungsanlage und zur Durchführung dieses Verfahrens geeignete Anlage

Die vorliegende Erfindung betrifft ein Verfahren beim Betrieb einer für Lebensmittel geeigneten Gasbehandlungsanlage, insbesondere einer Räucher-Kochanlage, bei dem die von einem Muffelbrenner erwärmten Behandlungsgase dem in einer Behandlungskammer befindlichen Behandlungsgut zugeführt und nach dem Durchströmen der Kammer abgeleitet werden, wobei dann mindestens ein Teil der aus der Behandlungskammer ausgetretenen, nunmehr mageren Behandlungsgase als Kreislaufgase aufbereitet und der Behandlungskammer erneut zugeführt wird.

Für Lebensmittel, insbesondere Fleischwaren, Fische und Käse sind Gasbehandlungs-, Räucher- Koch und Backanlagen bekannt, in denen verschiedene Behandlungsvorgänge nacheinander durchgeführt werden können, darüber hinaus aber auch noch ein Abkühlen von warmen Würsten durch ein Duschen mit mäßig kaltem Wasser möglich ist.

COMMERZBANK STUTTGART NR. 7751027    POSTSCHECKAMT STUTTGART NR. 25780    TELEFONISCHE AUSKÜNFTE SIND UNVERBINDLICH

Früher warden die verschiedenen Arbeitsgänge meist in verschiedenen Kammern, Koch- und Kühlwasserbecken, Duschen und ähnlichen Einrichtungen an dem zu behandelnden Gut nacheinander vorgenommen, wozu dann das Gut umständlich hin- und hertransportiert werden mußte. Die Behandlungsgase, Luft, Rauch, Dampf und Flüssigkeiten werden neuerdings dem Gut und den verschiedenen Rezepturen entsprechend bei den verschiedenen Arbeitsgängen nacheinander, zum Teil auch gemischt bezüglich Temperatur, Feuchtigkeit und Räucherdichte verschieden aufbereitet, und eventuell mit verschiedener Umwälzgeschwindigkeit während der richtigen Behandlungszeitabschnitte zugeführt. Soweit nötig und/oder zweckmäßig, können diese Behandlungsmedien auch wieder aus dem Behandlungsraum entnommen und abgeleitet, zum Teil auch frisch aufbereitet wieder zugeführt werden, wenn in möglichst wenigen, eventuell in nur einem einzigen Behandlungsraum oder einer Kammer eine möglichst vollständige, intensive und schnelle Behandlung erfolgen soll. Verbrauchte Gase und Verbrennungsgase eventuell verwendeter Heizbrenner wurden meist ins Freie, zum Teil über Schornsteine und ähnliche Abzugseinrichtungen abgeleitet und unter Umständen, um sie möglichst umweltfreundlich zu machen und die Nachbarschaft weniger zu belästigen, mittels teurer Filter, Waschanlagen, Nachverbrenner oder elektrostatischer Ausscheidungsanlagen vorher noch gereinigt, wozu meist sehr viel Energie-, Wasser-, Filterauswechsel- und Reinigungsaufwand kostspieliger- und raumfressenderweise notwendig ist. Bei der traditionallen Räucheranlage war der Boden der Kammer mit Sägemehl belegt worden, auf welches brennede Holzscheite zur allerdings schlechtkontrollierbaren Wärmeentwicklung gelegt wurden. Eine bessere Wärmeregulierung konnte durch einen Oel- bzw. Gasbrenner oder eine Elektro-Widerstandsheizung bewirkt werden, die sich auch thermostatisch steuern lassen.

In der Hitzeanlaufzeit bei weit geöffneter Zuluft- und Abluftöffnung trocknete die Oberfläche des Gutes, insbesondere die von Würsten ab, wobei sich die letzteren zunehmend erwärmten und im Inneren umröteten. Bei diesem Trocknungsvorgang wird von Würsten fast 10% ihres Gewichtes in Form von Feuchtigkeit in die Luft abgedampft und zum Schornstein hinausbefördert, was bei einer vollen Kammer mit etwa 1 $m^2$ Grundfläche eine Wassermenge von etwa 20 Liter ergibt. Das Sägemehl begann nun mehr und mehr zu schwelen und Rauch zu entwickeln, so daß sich an den Abtrocknungsvorgang nun die Räucherperiode anschloß, die bei nassen Würsten, wie sie von der Füllmaschine kommen, wirkungslos gewesen wäre. Zuluft in die Kammer und Abluft mußten zur Erzielung eines satten Rauches vermindert werden, um so eine Kondensation des sich an den Würsten abkühlenden Heissrauches besser zu bewirken.

Bei Räucherkammern, die mit offenen Gasbrennern ausgerüstet waren, erhielten die Würste eine bessere Rotfarbe, einen besseren Geschmack und wurden auch schneller fertig.

Nach dem Räuchern wurden die Würste zum Brühen (also Garen) in etwa 75$^o$ bis 80$^o$ C heißem Wasser aus der Räucherkammer entnommen. Sobald sie beim Brühen eine Kerntemperatur von etwa 65$^o$ bis 75$^o$ C erreicht hatten, waren sie fertig und gegart, das heißt, das vorher weiche Wurstbrät ist durch die Koagulation des Fleischeiweisses nunmehr schnittfest geworden. Die Würste wurden jedoch, falls sie heiß entnommen und an der Luft abgekühlt wurden, von außen her so eingetrocknet, daß man den als Wursthaut vorgesehenen Wurstdarm beim Schälen nicht mehr richtig abziehen konnte. Deshalb werden die Würste nach dem "Kochen" (Brühen-Garen) in mässig kaltem Wasser oder unter einer Dusche nass abgekühlt. Soweit zum Brühen eine Dampf-Kochkammer verwendet wird, scheidet die Wurst durch den Darm noch etwas Fett ab, so daß vor dem Kaltduschen durch ein anschließendes Warmduschen zweckmäßigerweise der Fettfilm erst abgewaschen wird.

Bei neueren Verfahren, bei denen die Würste nach dem Räuchern in der gleichen Kammer verbleiben und dort im Dampf gebrüht und anschließend geduscht werden, sind offene Gasbrenner nicht mehr verwendbar. Durch außerordentliche Räucher-, Gas- und Luftturbulenzen mittels Gebläse-Ventilatoren konnte infolge der erhöhten Bespülungsgeschwindigkeit, mit der die Gase das Behandlungsgut, also insbesondere die Würste behandeln, die Arbeitszeit zwar auch verkürzt werden, aber zum Räuchern mußte der Rauch außerhalb entwickelt werden, sonst wäre das Sägemehl auf die Würste geblasen und offene Flammen der Brenner wären zum Erlöschen gebracht worden. Die erforderliche Trocknungs- und Räuchergas-Hitze wurde von Konvektoren-Oberflächen nach dem Wärmetauscher-Prinzip auf die das Gut behandelnden Gase übertragen, denn Gas- oder Ölbrennerflammen mußten gegen die Turbulenzen geschützt und in abgeschlossene Brennermuffeln mit Abzug zum Schornstein verlegt werden, ohne mit der

0015521

Trocknungsluft oder den Räuchergasen in Berührung zu kommen. Der Wärmewirkungsgrad wurde dadurch verschlechtert und die außerordentlich günstige Wirkung der Gasbrennerabgase in Bezug auf schnellere Umrötung und besseren Geschmack des behandelten Gutes ging verloren. Auch zogen nach wie vor die Räucherabgase, die Umwelt belästigend, ins Freie, soweit sie nicht in aufwendigen Filter- und/oder Nachbrenner-bzw. Auswasch-Ausscheidungsverfahren ausgeschieden bzw. vernichtet wurden.

Darüber hinaus ist es beispielsweise durch die deutsche Patentschrift 895 243 bekannt, die aus der Behandlungskammer austretenden Behandlungsgase wieder aufzubereiten und erneut der Behandlungskammer zuzuführen. Obwohl bei einer solchen Kreislaufrückführung der Behandlungsgase weniger die Umwelt verschmutzende Abgase ausgestoßen werden, so müssen infolge der von den Behandlungsgasen aufgenommenen Feuchtigkeit und dem damit verbundenen Absinken der Wirkung der Behandlungsgase, insbesondere auch der Rauchgase, die Behandlungsgase ständig, wenigstens zum Teil, durch trockene/erneuert werden. Behandlungsgase Der deshalb nötige Abzug der verbrauchten feuchten Räuchergase aus dem Behandlungskreislauf ist aber nicht mehr umweltfreundlich.

Aufgabe der vorliegenden Erfindung ist es nun, die oben aufgezeigten Nachteile zu vermeiden und ein einfaches und preisgünstiges Verfahren zum Betrieb einer Gasbehandlungsanlage der oben behandelten Art sowie eine solche Anlage zu schaffen, mittels der raumsparend bei Verkürzung des Arbeitsprozesses eine Qualitätssteigerung sowie auch die Einsparung von Energie und vorzugsweise sowohl ein Trocknen oder Backen als auch ein Räuchern und Kochen oder Brühen des Behandlungsgutes nacheinander möglich ist.

Diese Aufgabe wird erfindungsgemäß dadurch gelöst, daß mindestens ein Teil der Muffel-Brennergase mit mindestens einem Teil der Behandlungsgase gemischt wird. Durch diese Maßnahme ist es möglich, mit ein und derselben Anlage verschiedene, völlig unterschiedliche Behandlungsvorgänge auch nacheinander und zeitlich verkürzt bei Personal- und Raumeinsparung durchzuführen und umweltschädliche Abzugsgase zu vernichten.

In diesem Zusammenhang ist es beispielsweise möglich, daß mindestens ein Teil der Brennergase am Ende der Brennermuffel entnommen und den Behandlungsgasen beigegeben wird, der restliche Teil der Brennergase dagegen über einen seine Wärme an die Kreislaufgase abgebenden Wärmeaustauscher abgeleitet wird. Je größer der Anteil der dabei entnommenen heißen Brennergase ist, desto schneller wird dann auch die Temperatur der Behandlungsgase eine höhere. Die heißen Brennergase, allein als Behandlungsgase benutzt, üben dabei auch schon eine räucherähnliche Wirkung auf das Behandlungsgut aus, die sich im Geschmack nur ganz wenig von der Holzrauchwirkung unterscheidet, so daß mit dem erfindungsgemäßen Verfahren sogar auch ohne Holzrauch geräuchert werden kann.

Zum Räuchern ist es noch von besonderem Vorteil, wenn abgezweigte, feuchte und rauchige Holzrauchbehandlungsgase mindestens in dem Umfang, wie sie durch neue Holzrauchbehandlungsgase ersetzt werden, der Flamme des Brenners in der Muffel zugeführt und durch dieselbe zu umweltfreundlichen Abgasen verbrannt werden. Durch diese Maßnahme können die zunehmend feuchter werdenden Räuchergase mindestens zum Teil laufend erneuert und der abgezweigte Teil dieser feuchten Räuchergase umweltsauber nachverbrannt werden, ohne daß hierzu etwa teure und im Betrieb kostspielige Zusatzanlagen oder Zusatzeinrichtungen notwendig sind. Um die dabei entstehende Nachverbrennungswärme bei dem erfindungsgemäßen Verfahren zu nutzen, erfolgt die Nachverbrennung in der den Kreislaufrauch erwärmenden Brennermuffel.

Ferner ist es auch noch zweckmäßig, daß die übrigen, außen an der Muffel des Brenners als Kreislaufgase vorbeigeführten Behandlungsgase durch zum Teil aus der Nachverbrennung der abgezweigten Räuchergase gewonnene und die von der Brennermuffel abgegebene Wärme erhitzt und aufbereitet werden, ohne daß diese zur Wiederverwendung bestimmten, zum Räuchern noch brauchbare Holzbestandteile enthaltenden Kreislaufgase mit einer Brennerflamme oder einer überhitzten Brennermuffel in Berührung kommen und dadurch unerwünschterweise etwa nachverbrannt würden.

Erfindungsgemäß werden diese durch Konvektorwärme vorerhitzten und deshalb besonders aufnahmebereiten unverbrannten Gase einem Rauchgenerator zugeführt und durch diesen hindurchgeführt, um nach Aufsättigung mit Räuchersubstanzen aufbereitet der Kammer wieder zugeführt zu werden.

Sollte es erwünscht sein, die relative Feuchtigkeit der Behandlungsgase noch weiter zu erhöhen, als dieses sowieso schon durch die Ausdünstigung des Gutes stattfindet, so ist es zweckmäßig, feuchte Flammenabgase und/oder Wasserdampf beizumischen, was beispielsweise dadurch geschehen kann, daß die Muffel des Brenners mit Wasser bespritzt und der dabei gebildete Wasserdampf den Behandlungsgasen beigemischt wird. Diese Dampfbehandlung des Gutes erfolgt besonders intensiv beim Brühvorgang, der sich an das Heißräuchern des Gutes anschließt.

Eine zur Durchführung dieses erfindungsgemäßen Verfahrens geeignete Gasbehandlungsanlage, insbesondere eine Heiz-Räucher-Kochanlage, weist erfindungsgemäß einen die Behandlungsgase erwärmenden Muffelbrenner auf, dessen Brennergase nach der Verflammung ausgeleitet werden oder über eine Beimischklappe den Behandlungsgasen beimischbar oder als solche allein der Behandlungskammer zuführbar sind.

Eine einfache und leichte thermische Wiederaufbereitung der Behandlungsgase läßt sich beispielsweise dadurch erreichen, daß die aus der Kammer ausgetretenen und zur Wiederverwendung vorgesehenen Behandlungsgase an dem Muffelbrenner und/oder einem an diesen angeschlossenen Wärmeaustauscher vorbeiströmen.

Auch bei dieser erfindungsgemäßen Gasbehandlungsanlage ist in an sich bekannter Weise an die Behandlungskammer ein Kreislaufgaskanal angeschlossen, der wieder mit verschiedenen, mindestens teilweise absperrbaren Abzweig- und Beimischkanälen oder Leitungen verbunden ist.

Um nun einen Teil der durch die Kammer geströmten Behandlungsgase zwecks Ausscheidung abzuzweigen und in dem Muffelbrenner nachzuverbrennen, ist der Kreislaufgaskanal zweckmäßig über eine durch ein Absperrorgan mindestens teilweise absperrbare Leitung mit dem Einspeisungsteil der Brennermuffel verbunden.

Eine gute Ausnutzung der von der Muffel des Brenners abgegebenen Wärme läßt sich beispielsweise dadurch erreichen, daß sich die Muffel des Brenners in dem Kreislaufgaskanal befindet oder so in diesen hineinragt, daß die durch den Kreislaufgaskanal hindurchströmenden Behandlungsgase an der Außenseite der Brennermuffel entlangströmen.

Ist der Gasbehandlungsanlage noch in an sich bekannter Weise ein Rauchgenerator zugeordnet, so ist es von Vorteil, wenn vorzugsweise nach der Aufheizeinrichtung an dem Kreislaufgaskanal eine vorzugsweise über ein regelbares Absperrorgan absperrbare, zu einem Rauchgenerator führende Leitung angeschlossen ist und von dem Rauchgenerator eine Einspeiseleitung zum Kreislaufgaskanal oder der Kammer führt. Diese vorherige Aufheizung der zur Aufnahme der Räuchersubstanzen bestimmten Gase ist insofern besonders wirksam, als die heißen Gase bis zur Sättigung mehr aufnehmen können als kältere Gase und weil bei der entsprechend größeren Wiederabkühlung am Gut auch entschieden mehr Räucherkondensat an das Gut abgegeben wird.

Weitere Merkmale der Erfindung und deren technische Vorteile ergeben sich aus der nachfolgenden Beschreibung eines
Ausführungsbeispiels in Verbindung mit den Ansprüchen sowie
der Zeichnung.

Es zeigen:

> Fig. 1 in der Seitenansicht den Höhenlängsschnitt
> einer Heiz-Räucher-Kochanlage,
>
> Fig. 2 eine Draufsicht auf einen versetzten Querschnitt
> derselben und
>
> Fig. 3 eine Innenansicht der Anlage bei versetztem
> Schnitt.

Die auf der Zeichnung dargestellte Heiz-Räucher-Kochanlage
weist eine durch eine Tür 1 zugängliche Behandlungskammer 2
auf, in die in bekannter Weise ein Traggestell mit dem
Behandlungsgut einzuschieben ist. Diese Kammer 2 ist dabei
an ihrer Rückseite durch eine schürzenartige, als Tür gestaltete Blechwand 3 begrenzt, die nicht ganz bis zum
Boden 4 reicht und somit eine Einlaßöffnung 5 freigibt.
Die Abdeckung 6 der Kammer 2 dagegen ist domartig gestaltet
und weist eine zentrale Austrittsöffnung 7 auf, in die ein
durch einen Elektromotor 8 angetriebener Radiallüfter 9
ansaugend teilweise hinabragt. Eine andere
Ansaugseite beim Radiallüfter 9 steht dabei mit einem
Frischluftkanal 10 in Verbindung, der durch eine gewichtsentlastet gezeichnete Frischluftklappe D absperrbar ist.

Zwischen der Rückwand 11 der Behandlungsanlage und der
zuvor bereits erwähnten Blechwand 3 befindet sich ein mit 12 bezeichneter Kreislaufgaskanal, in dem die in Richtung der Pfeile 13 durch die Kammer 2 hindurchströmenden Behandlungsgase im geschlossenen Kreislauf in Richtung des Pfeiles 14 um die Kammer 2 herumgeführt und wieder durch die Einlaßöffnung 5 in die Kammer 2 eingeleitet werden. In diesem Kreislaufgaskanal 12 ist derart von oben her die Muffel 15 eines mit 16 bezeichneten Muffelbrenners hineingeschoben, daß eventuelle Verbrennungsrückstände nach unten fallen und der Muffelbrenner 16 sauber bleibt. An der Außenseite der Muffel 15 sind dabei mit 17 bezeichnete Rippen angeordnet, an denen das durch den Kreislaufgaskanal 12 hindurchtretende Behandlungsgas vorbeiströmt und die von der Muffel 15 abgegebene Wärme aufnimmt. An das Muffelende 18 schließt sich ein mit 19 bezeichneter Querkanal an, an den wieder ein als Wärmeaustauscher dienendes Heizregister 20 angeschlossen ist. Dieses Heizregister 20 steht dabei über eine Leitung 21 mit einem Abgaskanal 22 in Verbindung. Wie insbesondere aus der Fig. 3 ersichtlich, so ist an der Unterseite des Querkanales 19 ein den Austritt der Brennergase in Richtung der Pfeile 23 ermöglichender Rohrstutzen 23 angeordnet, oberhalb dessen sich eine Beimischklappe A befindet.

Benachbart zu der in der Abdeckung 6 der Kammer 2 vorgesehenen Austrittsöffnung 7 befindet sich ein mit 25 bezeichneter Verteilerraum, der nicht nur mit dem Kreislaufgaskanal 12, sondern darüber hinaus über eine Leitung 26 mit dem Abgaskanal 22 sowie über eine weitere Leitung 27 mit dem Verbrennungsraum 28 des Muffelbrenners 16 in Verbindung steht. Hierbei sind die Leitung 26 durch eine Abgasklappe C und die

0015521

Leitung 27 durch eine Abzweigklappe B zu verschließen.

Wie sich weiter aus der Fig. 1 ergibt, so ist diese Behandlungsanlage zusätzlich noch mit einem Reibrauchgenerator 29 ausgestattet, dessen Oberkammer 30 über eine durch eine Reibrauchklappe E verschließbare Leitung 31 mit dem Kreislaufgaskanal 12 der Behandlungsanlage verbunden ist. Die der Aufnahme des gleichzeitig auch als Radialventilator ausgebildeten Reibrades 32 dienende Unterkammer 33 dagegen ist über eine mit 34 bezeichnete Speiseleitung mit dem untersten Teil des Kreislaufgaskanales 12 oder dem Inneren der Kammer 2 verbunden.

Benachbart zu der unterhalb der Blechwand 3 befindlichen Einlaßöffnung 5 ragt in den Kreislaufgaskanal 12 noch das Ende einer mit 35 bezeichneten Leitung hinein, durch die gegebenenfalls eine Befeuchtung der Behandlungsgase bewirkender Dampf zugeführt werden kann. Dem gleichen Zweck dient auch eine oben bei der Muffel 15 befindliche Düse 36, die an eine mit 37 bezeichnete Wasserleitung angeschlossen ist. Das aus dieser Düse 36 austretende Wasser wird dabei gegen die Muffel 15 gespritzt, so daß das auftreffende Wasser sofort verdampft und als Dampf von den Behandlungsgasen aufgenommen wird.

Die Wirkungsweise dieser zuvor beschriebenen Behandlungseinrichtung ist die folgende: zunächst einmal wird der Muffelbrenner 16 in Gang gesetzt , wobei dann die durch die
Flamme 38 verbrannten Brennerabgase, aus der Brennermuffel 15
kommend, in Richtung der Pfeile 39 durch das Heizregister 20
hindurchströmen und über die Leitung 21 in den Abgaskanal 22
gelangen. Sobald die Kammer 2 mit dem Behandlungsgut beschickt
ist, wird durch ein Öffnen der Beimischklappe A die Verbindung
zum Rohrstutzen 24 hergestellt, so daß die heißen Brennergase
nunmehr in Richtung der Pfeile 23 in den Kreislaufgaskanal 12
und die Kammer 2 eintreten und von dem Radiallüfter 9 in Richtung
der Pfeile 13 gegen die in der Abdeckung 6 befindliche
Öffnung 7 hochgezogen werden, wobei sie ihre Wärme an das
noch feuchte Gut abgeben und dasselbe umröten. Da der Radiallüfter 9 nur teilweise in den oberen Bereich der Kammer 2
hineinragt, wird auch nur ein Teil der von ihm angesaugten
Behandlungsgase wieder in Richtung der Pfeile 40 zur Durchwirbelung der Behandlungsgase in die Kammer 2 zurückgedrückt.
Die mit Feuchte oder Abtrocknungsdampf aus dem Gut beladenen,
abgekühlten und durch die Öffnung 7 ausgetretenen Behandlungsgase dagegen gelangen bei geöffneter Abgasklappe C über
die Leitung 26 in den Abgaskanal 22.

Ist das Trocknen des Gutes fortgeschritten und soll nunmehr
ein Räuchern desselben stattfinden, so wird zunächst einmal
die Beimischklappe A in Richtung Querkanal 19 teilweise
oder auch vollständig geöffnet, so daß der größte Teil
der Brennerabgase durch das Heizregister 20 und die
Leitung 21 über den Abgaskanal 22 abströmt. Außerdem wird
die Reibrauchklappe E geöffnet, so daß wenigstens ein
Teil der in dem Kreislaufgaskanal 12 durch die von der Muffel 15 und dem Heizregister 20 abgegebene Wärme schon erhitzten, zur Rauchbeigabe oder auch zur Wiederaufsättigung mit Rauch bestimmten Behandlungsgase in Richtung der Pfeile 41 durch den Reibrauchgenerator 29 hindurchströmen und, angereichert mit neuen Räuchersubstanzen, über die Speiseleitung 34 in Richtung der Pfeile 42 durch die Einlaßöffnung 5 in die Kammer 2 eintreten können. Da bei diesem Räuchervorgang auch die Abzweigklappe B, die Abgasklappe C und die Frischluftklappe D geschlossen sind, wird das Behandlungsgas nunmehr in einem geschlossenen Kreislauf (Recycling Rauch) durch die Kammer 2, den Kreislaufgaskanal 12 sowie den Reibrauchgenerator 29 hindurch und wieder in die Kammer 2 geführt, wobei die Behandlungsgase beim Durchströmen des Kreislaufgaskanales 12 durch Bestreichen der Muffel 15 und des Heizregisters 20 Wärme aufnehmen und auf der gewünschten Temperatur gehalten werden.

Im weiteren Verlauf des Räuchervorganges nehmen die Räuchergase zunehmend Feuchtigkeit auf, so daß, um den Räuchervorgang wirkungsvoll aufrechterhalten zu können, ein Teil dieser Räuchergase samt deren Feuchtigkeit auszuscheiden ist. Das erfolgt dadurch, daß die Abzweigklappe B geöffnet wird und ein Teil der aus der Öffnung 7 ausgetretenen Behandlungsgase nunmehr über die Leitung 27 in den von der Muffel 15 umgebenen Verbrennungsraum 28 gelangen, wo sie von der Flamme 38 zu umweltfreundlichen Abgasen nachverbrannt werden und zusammen mit den anderen Brennergasen über das Heizregister 20 in den Abgaskanal 22 gelangen. Der Ersatz dieser durch den Abgaskanal 22 abströmenden Gase erfolgt dabei durch über den Kanal 10 zuströmende Frischluft, wobei sich die mit der Abzweigklappe B gekoppelte oder durch ein Gewicht entlastete Frischluftklappe D in dem Maße öffnet, in dem in dem Verteilerraum 25 ein Unterdruck herrscht.

Ist der Räuchervorgang beendet, so wird die Beimischklappe A zum Rohrstutzen 24 auf jeden Fall völlig geschlossen, so daß die Brennergase nunmehr allein dem Heizregister 20 zuströmen und über den Abgaskanal 22 ins Freie austreten. Da gleichzeitig auch die Abzweigklappe B und die Reibrauchklappe E geschlossen werden und die Abgaskⁱappe C sowie die Frischluftklappe D in ihrer geschlossenen Stellung verbleiben, werden nunmehr die in der Kammer 2 befindlichen Behandlungsgase in geschlossenem Kreislauf in Richtung der Pfeile 13/14 umgewälzt und durch Dampfentwicklung auf der Muffel 15 oder die Zugabe von Dampf über die Leitung 35 ein Kochen oder Brühen des in der Kammer 2 befindlichen Behandlungsgutes erreicht, wobei der Wasserdampf dem Behandlungsgut dadurch Wärmeenergie zuführt, daß er an diesem kondensiert. Ohne Dampfentwicklung kann mit Kreislaufhitze gebacken werden, wozu über die Beimischklappe A eingelassene Brennerabgase mitbenutzbar sein können.

Durch eine unterhalb der Kammerabdeckung 6 angebrachte Dusche kann das in die Kammer 2 befindliche Gut auch warm oder kalt abgewaschen werden.

Wie sich aus den vorstehenden Darlegungen ergibt, so kann die erfindungsgemäße Behandlungsanlage in mannigfacher Weise umweltfreundlich betrieben werden und ermöglicht eine sehr schnelle und wirkungsvolle, jedoch auch energiesparende Behandlung des in die Kammer 2 eingebrachten Gutes. Durch Zeituhren hintereinanderschaltbare Arbeitsgänge, denen thermostatische, hygrostatische und pneumatische Steuerelemente zugeordnet sind, die auf den Brenner, die Dampfzugabe und auf die Klappenbetätigung regulierend wirken, kann der ganze Arbeitsprozeß vorprogrammiert abgewickelt werden.

0015521

## Bezugszeichenliste

1 Tür von 2

2 Behandlungskammer

3 Blechwand (Innentür)

4 Boden von 2

5 Einlaßöffnung von 2

6 Abdeckung von 2

7 Austrittsöffnung zu 25 a.2

8 elektr. Motor von 9

9 Radiallüfter

10 Frischluftkanal

11 Rückwand

12 Kreislaufgaskanal

13 Pfeil

14 Pfeil

15 Muffel

16 Muffelbrenner

17 Rippen von 15

18 Muffelende

19 Querkanal

20 Heizregister

21 Leitung von 20/22

22 Abgaskanal

23 Pfeil

24 Rohrstutzen

25 Verteilerraum

26 Leitung zu 22

27 Leitung zu 28

28 Verbrennungsraum

29 Reibrauchgenerator

30 Oberkammer von 29

31 Leitung 12/30

32 Reibrad

33 Unterkammer von 29

34 Speiseleitung

35 Leitung für Dampfzugabe

36 Düse

37 Wasserleitung

38 Flamme

39 Pfeile)

40 Pfeile)

41 Pfeile)     für Strömungs-

42 Pfeile)     richtungen

A = Beimischklappe zu 20/24

B = Abzweigklappe zu 27

C = Abgasklappe zu 26

D = Frischluftklappe zu 10

E = Reibrauchklappe zu 31

PATENTANWALT · 0015521

DIPL.-ING. GERD COMMENTZ

7 STUTTGART 13

KLIPPENECKSTRASSE 4 · TELEFON (0711) 47109

19. Februar 1980

S 514

Ludwig Seydelmann, Hölderlinstr. 9, 7000 Stuttgart 1
Bundesrepublik Deutschland

---

Verfahren zum Betrieb einer für Lebensmittel
geeigneten Gasbehandlungsanlage und zur Durchführung dieses Verfahrens geeignete Anlage.

---

A n s p r üc h e

1. Verfahren beim Betrieb einer für Lebensmittel geeigneten, mit einem Muffelbrenner ausgestatteten Gasbehandlungsanlage, insbesondere einer Heiz-Räucher-Kochanlage, bei dem die Behandlungsgase dem in einer Behandlungskammer befindlichen Behandlungsgut zugeführt und nach dem Durchströmen der Kammer wieder abgeleitet werden, wobei mindestens ein Teil der aus der Kammer ausgetretenen, nunmehr mageren Behandlungsgase als Kreislaufgase aufbereitet und der Kammer wieder erneut zugeführt wird, dadurch gekennzeichnet, daß mindestens ein Teil der Muffel-Brennergase mit mindestens einem Teil der Behandlungsgase gemischt wird.

2. Verfahren nach Anspruch 1, dadurch gekennzeichnet, daß

0015521

mindestens ein Teil der Brennergase am Ende der Brennermuffel (15) entnommen und den Behandlungsgasen beigemischt
wird, der restliche Teil der Brennergase dagegen über einen
seine Wärme an die Kreislaufgase abgebenden Wärmeaustauscher (20)
abgeleitet wird.

3. Verfahren nach Anspruch 1 und/oder 2, dadurch gekennzeichnet,
daß abgezweigte Behandlungsgase mindestens teilweise der
Flamme (38) des Brenners (16) in dessen Muffel (15) zugeführt
                                     selbe
und in durch die zu umweltfreundlichen Abgasen verbrannt
werden.

4. Verfahren nach einem oder mehreren der Ansprüche 1 bis 3,
dadurch gekennzeichnet, daß die übrigen, außen an der
Muffel (15) des Brenners (16) als Kreislaufgase vorbeigeführten Behandlungsgase durch die zum Teil aus der Nachverbrennung gewonnene und von der Brennermuffel (15) abgegebene Wärme erhitzt und aufbereitet werden.

5. Verfahren nach einem oder mehreren der Ansprüche 1 bis 4,
dadurch gekennzeichnet, daß mindestens ein Teil der zuvor
erhitzten Behandlungsgase durch einen Rauchgenerator (29)
hindurchgeführt und nach Aufsättigung mit Räuchersubstanzen
aufbereitet der Kammer (2) zugeführt wird.

6. Verfahren nach einem oder mehreren der Ansprüche 1 bis 5,
dadurch gekennzeichnet, daß den Behandlungsgasen feuchte
Flammenabgase und/oder Wasserdampf beigemischt werden.

0015521

7. Gasbehandlungsanlage zur Durchführung des Verfahrens nach einem oder mehreren der Ansprüche 1 bis 6, __dadurch gekennzeichnet__ daß die Behandlungsanlage einen die Behandlungsgase erwärmenden Muffelbrenner (16) aufweist, dessen Brennergase nach der Verflammung über eine Beimischklappe(A) den Behandlungsgasen beimischbar oder als solche allein der Kammer (2) zuführbar sind.

8. Anlage nach Anspruch 7, dadurch gekennzeichnet, daß die aus der Kammer (2) ausgetretenen, zur Aufbereitung und Wiederverwendung vorgesehenen Behandlungsgase an dem Muffelbrenner (16) und/oder einem an diesem angeschlossenen Wärmeaustauscher (20) vorbeiströmen.

9. Anlage nach Anspruch 7, dadurch gekennzeichnet, daß an die Kammer (2) ein Kreislaufgaskanal (12) angeschlossen ist, der wieder mit verschiedenen, mindestens teilweise absperrbaren Abzweig- und Beimischkanälen oder Leitungen (10,26,27,31) verbunden ist.

10. Anlage nach Anspruch 9, dadurch gekennzeichnet, daß an den Kreislauf der Gase eine Frischluft zuführende Leitung (10) angeschlossen ist, deren Absperrorgan (D) sich automatisch öffnet oder mit der Abgasklappe (C) gekoppelt ist.

11. Anlage nach einem oder mehreren der Ansprüche 7 bis 10, dadurch gekennzeichnet, daß der Kreislaufgaskanal (12) über eine durch eine Abzweigklappe (B) mindestens teilweise absperrbare Leitung (27) mit dem Einspeisungsteil der Brennermuffel (15) verbunden ist.

12. Anlage nach einem oder mehreren der Ansprüche 7 bis 11, dadurch gekennzeichnet, daß vorzugsweise nach der Aufheizeinrichtung (15,20) an dem Kreislaufgaskanal (12) eine zu einem Rauchgenerator (29) führende, vorzugsweise über ein regelbares Absperrorgan (E) absperrbare Leitung (31) angeschlossen ist und von dem Rauchgenerator (29) eine Einspeiseleitung (34) zum Kreislaufgaskanal (12) oder zur Kammer (2) führt.

13. Anlage nach einem oder mehreren der Ansprüche 7 bis 12, dadurch gekennzeichnet, daß verbrauchte Räucherbehandlungsgase durch ein Abzweigorgan (B) über eine Leitung (27) und vorzugsweise ringförmig um das Brennerrohr herum angeordnete Düsen der Brennerflamme (38) zugeleitet werden.

**Fig.1**

**Fig.3**

**Fig. 2**